# FASCICULE DE BREVET EUROPEEN

(11) **EP 2 074 411 B1**
(45) Date de publication et mention de la délivrance du brevet: **30.03.2016**
(21) Numéro de dépôt: 07803601.9
(22) Date de dépôt: 25.09.2007
(51) Int. Cl.: G01N 22/00

(54) **DISPOSITIF MICRO-ONDE DE CONTROLE D'UN MATERIAU**
MIKROWELLENVORRICHTUNG ZUR KONTROLLE EINES MATERIALS
MICROWAVE DEVICE FOR CONTROLLING A MATERIAL

(30) Priorité: 25.09.2006 FR 0608398
(43) Date de publication de la demande: 01.07.2009
(73) Titulaire: Microwave Vision, 91140 Villebon Sur Yvette (FR)
(72) Inventeur: GARREAU, Philippe, F-91540 Mennecy (FR); DREAN, Jérôme, 29470 Plougastel Daoulas (FR); DUCHESNE, Luc, F-91470 Angervilliers (FR); GANDOIS, Arnaud, F-91650 Breuillet (FR); DURAND, Ludovic, F-91310 Leuville Sur Orge (FR); TESSIER, Virginie, F-92350 Le Plessis Robinson (FR); IVERSEN, Per, Marietta, 30068 (US); ROBIC, Nicolas, 56380 Beignon (FR)
(74) Mandataire: Regimbeau
(86) Numéro de dépôt international: PCT/EP2007/060150
(87) Numéro de publication internationale: WO 2008/037705

(56) Documents cités:
- EP-A- 0 940 672
- WO-A-95/32665
- FR-A1- 2 614 419
- US-A- 5 841 288
- PH. GARREAU, L. DUCHESNE, A. GANDOIS, L. FOGED, P.O. IVERSEN: "Probe Array Concepts for Fast Testing of Large Radiating Structures" 26TH ANNUAL ANTENNA MEASUREMENT TECHNOLOGIES ASSOCIATIONS, octobre 2004 (2004-10), XP002429703 Atlanta, US

## Description

### Domaine de l'invention

La présente invention concerne un dispositif de contrôle d'un matériau. La présente invention concerne également un procédé mis en oeuvre avec ce dispositif.

### Arrière plan technologique

Le dispositif selon l'invention peut être utilisé pour différentes applications.

En particulier, le dispositif selon l'invention permet de contrôler des matériaux non totalement métalliques tels que les matériaux de type bois, papier, laine de roche ou de verre, verre, plastiques, matériaux agroalimentaires ou éléments rayonnants...

Pour ce type de matériaux, il peut notamment permettre de mesurer les propriétés physiques de matériaux (densité, humidité) ou encore de détecter les défauts du matériau contrôlé (cavité, inclusion,...).

Le contrôle de matériaux sur des lignes de production industrielle requiert l'emploi de dispositifs rapides et le plus souvent non intrusifs. De tels dispositifs non intrusifs sont connus, comme par exemple les dispositifs à rayons X, gamma, infrarouge ou à ultrasons, et sont chacun dédiés à des applications spécifiques.

Pour améliorer les performances de ces dispositifs, on a déjà proposé de les associer, ce qui permet au moins d'obtenir les avantages de chacun de ces dispositifs pris indépendamment.

Cependant, pour des applications à des matériaux non métalliques, si l'emploi de dispositifs basés plus spécialement sur des ondes électromagnétiques présente des avantages certains (en particulier une pénétration importante des ondes électromagnétiques à l'intérieur du matériau non métallique), les techniques actuelles restent limitées pour les applications industrielles.

En effet, celles-ci exigent des mesures en temps réel, compte tenu de la vitesse de défilement du matériau à contrôler se déplaçant sur sa chaîne de production et exigent également un contrôle sur de grandes sections de matériaux.

L'invention a pour but de remédier aux limitations mentionnées ci-dessus.

Plus précisément, un premier but de la présente invention est de proposer un dispositif capable de contrôler un matériau non totalement métallique.

Un autre but de l'invention est de proposer un dispositif capable d'effectuer un contrôle en temps réel du matériau.

Un autre but de l'invention est de pouvoir effectuer ce contrôle sur de larges portions de matériaux.

Un autre but de l'invention est de proposer un dispositif modulaire, parfaitement adaptable à tous types de lignes de production, et simple à mettre en place.

On connaît déjà par le document FR2614419 un dispositif selon le préambule de la revendication 1.

### Présentation de l'invention

L'invention propose quant à elle un dispositif selon la revendication 1 et un procédé selon la revendication 15.

### Brève description des dessins

L'invention sera mieux comprise et d'autres objectifs, buts et avantages apparaîtront à la lecture de la description qui va suivre, donnée à titre d'exemple non limitatif et grâce aux dessins annexés parmi lesquels:
- La figure 1 illustre une vue schématique d'un dispositif de contrôle d'un matériau en mode transmission;
- La figure 2 illustre un schéma synoptique d'un dispositif de contrôle d'un matériau selon l'invention ;
- La figure 3 illustre une vue schématique d'un dispositif de contrôle d'un matériau selon l'invention en mode réflexion;
- La figure 4 illustre une vue schématique d'un capteur intégrant un élément de modulation;
- La figure 5 illustre un schéma d'un réseau de capteurs intégrant des éléments de modulation selon la figure 4 ;

### Description détaillée de l'invention

### 1. Dispositif de contrôle d'un matériau en mode transmission

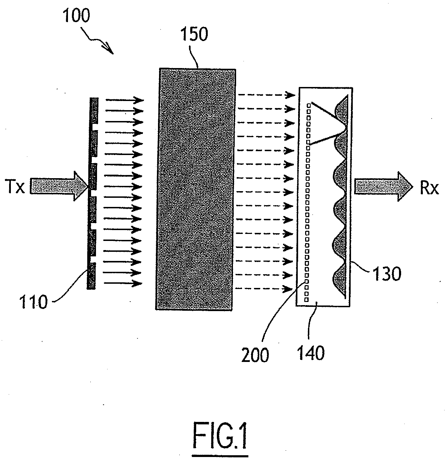

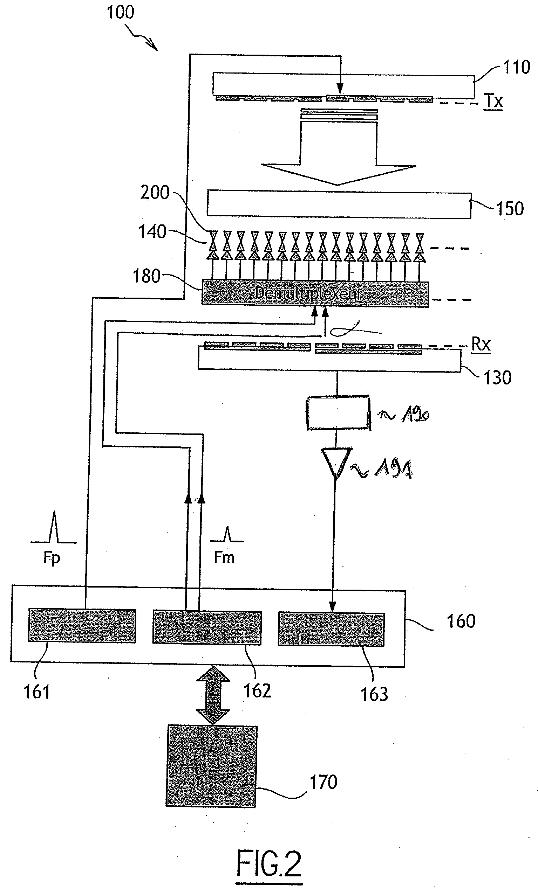

On distingue sur les figures 1 et 2 un dispositif de contrôle 100 d'un matériau 150 dans une configuration en simple transmission.

Ce dispositif de contrôle 100 se présente sous la forme :
- de moyens d'émission 110 d'un signal électromagnétique à une fréquence porteuse Fp pour illuminer le matériau 150 à contrôler ;
- de moyens de modulation 140 à une fréquence Fm2 du signal électromagnétique reçu du matériau 150;
- de moyens de réception 130 de signaux électromagnétiques résultant de la modulation.

Les moyens de modulation 140 sont disposés, sur le parcours du signal, entre le matériau 150 et les moyens de réception 130 de signaux électromagnétiques résultant de la modulation.

Les moyens d'émission 110 d'une part et les moyens de modulation 140 et de réception d'autre part sont disposés de part et d'autre du matériau 150 sous test de sorte que les moyens de modulation 140 reçoivent le signal transmis après qu'il est traversé le matériau 150.

### a. Les moyens d'émission

Les moyens d'émission 110 comprennent un réseau d'antennes de transmission adjacentes destiné à émettre le signal électromagnétique à la fréquence de porteuse Fp. Ce signal est plus précisément une onde électromagnétique plane. La fréquence Fp se situe dans le domaine micro-ondes.

De préférence, les antennes sont des antennes patch.

### b. Les moyens de modulation

Les moyens de modulation 140 quant à eux comprennent un réseau de capteurs 200 disposés face au matériau 150 et alignés dans un plan commun perpendiculaire au sens de propagation du signal émis par les moyens d'émission 110.

Leur rôle est de perturber localement le champ électromagnétique à la fréquence de modulation Fm2 pour permettre de discrétiser spatialement les signaux ayant traversé le matériau 150 en autant de signaux indépendants qu'il y a de capteurs 200.

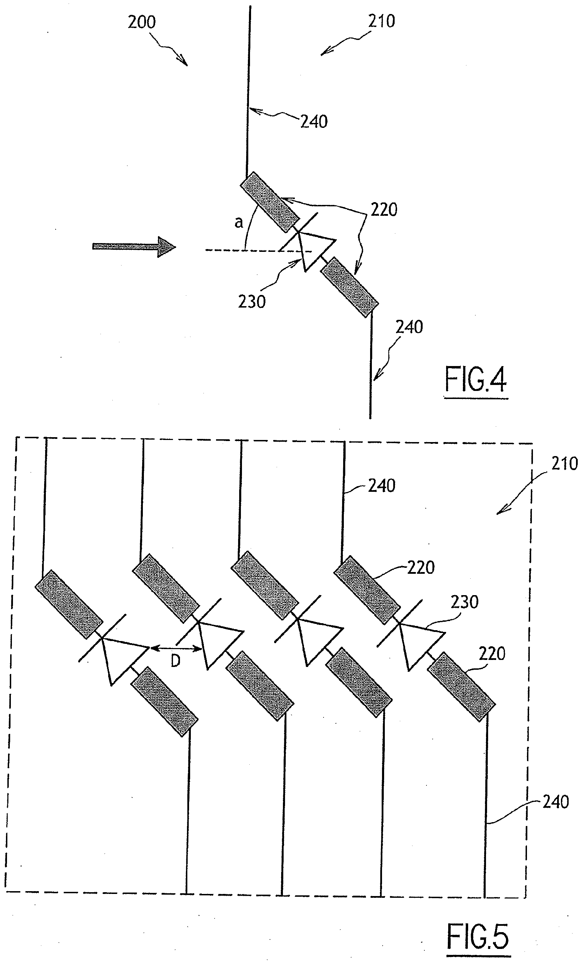

Ces capteurs 200 intégrant des éléments de modulation pour la discrétisation spatiale seront décrits plus en détail en relation avec les figures 4 et 5.

Par ailleurs, une variante de réalisation de la présente invention propose des moyens de modulation qui présentent les fréquences de modulation suivantes, Fm2, Fm2-1, Fm2-2, ... Fm2-i, avec i correspondant au nième capteur.

### c. Les moyens de réception

Par ailleurs, les moyens de réception 130 comprennent un réseau d'antennes de réception alignées de préférence du même type voire identiques aux antennes du réseau d'émission.

Ce réseau d'antennes de réception est placé derrière le réseau de capteurs de modulation spatiale 200.

Il est destiné à collecter les signaux à la fréquence de la porteuse et les signaux aux fréquences modulées Fp ± Fm résultant de la modulation.

Dans une variante de réalisation des moyens de réception 130, le réseau d'antennes de réception et le réseau de capteurs de modulation spatiale 200 peuvent se trouver sous la forme d'un réseau d'éléments indépendants comprenant chacun une antenne de réception et un capteur de modulation spatiale intégrés.

### d. Autres éléments du dispositif de contrôle

En s'appuyant sur la figure 2, le dispositif comprend également des moyens de démultiplexage 180 du signal modulant à la fréquence Fm2. Ces moyens de démultiplexage 180 ont pour fonction d'adresser les différents capteurs 200 c'est à dire permettre aux moyens de réception 130 de distinguer la provenance des différents signaux issus des capteurs 200.

Ils peuvent être des moyens de démultiplexage temporel ou spatial.

Dans le cas d'un démultiplexage temporel, la distinction est réalisée en distribuant de manière séquentielle le signal modulant vers les différents capteurs 200.

Dans le cas d'un démultiplexage spatial, cette distinction est réalisée en attribuant une fréquence de modulation Fm différente ou un ensemble de modulations orthogonales à chaque capteur 200 du réseau simultanément.

Le dispositif comprend également des moyens de filtrage 190 et des moyens d'amplification 191 des signaux à la fréquence de la porteuse Fp et aux fréquences modulées Fp ± Fm reçus des moyens de réception 130.

Plus précisément, les moyens de filtrage 190 comprennent un filtre passe bande dont la fréquence de coupure et la bande passante sont adaptées pour éliminer la fréquence de la porteuse Fp avant amplification des signaux modulés.

La plage dynamique effective de fonctionnement d'un récepteur 163 collectant les rayons ayant traversé le matériau 150 est alors recalée sur les signaux modulés aux fréquences Fp ± Fm dont les niveaux se trouvent typiquement à 60 - 80 dB en dessous de la fréquence de la porteuse Fp choisie.

Ces moyens de filtrage 190 permettent de ne pas saturer le récepteur 163 par le signal à la fréquence porteuse Fp et offrent ainsi la possibilité d'obtenir une bien meilleure dynamique du dispositif.

Dans le cas d'un dispositif à fréquences porteuses multiples, on peut utiliser des filtres centrés sur chacune des fréquences porteuses et qui se déplacent sur la bande de fréquences comme, par exemple, les filtres Yttrium Iron Garnet YIG.

Par ailleurs, les moyens d'amplification 191 comprennent un amplificateur de type faible bruit destiné à recevoir les signaux filtrés et les amplifier avant qu'ils soient collectés par le récepteur 163.

Enfin, le dispositif comprend un processeur 170 communiquant avec des unités spécifiques 161, 162 et 163 destinées à gérer respectivement l'émission du signal au niveau des moyens d'émission 110, les moyens de démultiplexage et le récepteur 163 connecté aux moyens de réception 130 pour mesurer les parties réelle et imaginaire des signaux électromagnétiques modulés.

Le processeur 170 comprend également des moyens de traitement des signaux réels et imaginaires issus du récepteur 163 pour améliorer la détection de perturbations du signal électromagnétique émis par les moyens d'émission 110.

Le processeur 170 comprend de plus des moyens de visualisation pour visualiser, après traitement, une image du matériau 150 contrôlé, à partir des signaux résultant de la modulation.

### e. Principe de fonctionnement du dispositif de contrôle

Avec de tels moyens, il est possible de mettre en oeuvre un procédé dans lequel on émet un signal électromagnétique à une fréquence Fp pour illuminer le matériau 150 à contrôler.

Ainsi une fois émis par les moyens d'émission 110, le signal électromagnétique se propage à travers le matériau 150 à contrôler.

La moindre inhomogénéité du matériau 150, ou une différence de densité, d'humidité ou de température dans celui ci engendre une modification dans le comportement du champ électromagnétique propagé dans le matériau 150.

De même, la présence de défauts, de part leurs différences de propriétés diélectriques ou magnétiques avec celles du matériau 150 se traduit pas une perturbation du signal électromagnétique propagé dans le matériau 150 à l'endroit où se trouve le défaut.

Le signal ainsi modifié est reçu par les capteurs 200 du réseau des moyens de modulation 140.

On module ensuite, dans chacun de ces capteurs 200, le signal électromagnétique issu du matériau 150 à une fréquence de modulation Fm2. Les signaux modulés issus de chaque capteur 200 sont ensuite reçus par les antennes du moyen de réception 130.

De cette manière, on est en mesure de connaître après réception au niveau des moyens de réception 130 des signaux alors modulés, quel(s) capteur 200(s) a détecté un signal perturbé. A ce capteur 200 va correspondre une zone localisée du matériau 150.

Ces signaux modulés et reçus par les moyens de réception 130 sont ensuite filtrés, amplifiées et traités pour acquérir une image du matériau 150 à contrôler.

La perturbation du signal électromagnétique provoquée par la présence de défauts dans une zone du matériau 150 sera visualisée sur l'image au niveau d'un ou plusieurs capteurs 200 particuliers et le défaut sera alors localisé.

De même l'inhomogénéité ou la différence de densité, d'humidité ou de température dans le matériau 150 pourront être mis en évidence par ce dispositif.

Dans une variante de réalisation de la figure 1, les parties rayonnantes du dispositif étant réciproques, on prévoit, en outre, d'émettre par les antennes des moyens de réception 130 et de recevoir par les antennes des moyens d'émission 110.

### f. Dispositif de contrôle à double modulation

On prévoit d'ajouter au dispositif de la figure 1, en outre, des moyens de modulation du signal émis par les moyens d'émission 110 à la fréquence de modulation Fm1.

Cette fréquence de modulation Fm1 peut être identique ou différente de la fréquence de modulation du signal électromagnétique reçu du matériau 150.

Ces moyens sont similaires aux moyens de modulation 140 précédemment cités et décrits plus en détail en relation avec les figures 4 et 5.

De plus, une variante de réalisation de la présente invention propose des moyens de modulation qui présentent les fréquences de modulation suivantes, Fm1, Fm1-1, Fm1-2,...Fm1-i avec i correspondant au nième capteur.

Ces moyens de modulation sont disposés, sur le parcours du signal, entre les moyens d'émission 110 et le matériau à analyser 150.

Ils discrétisent spatialement le signal électromagnétique émis par les moyens d'émission 110 en autant de signaux qu'il y a de capteurs dans le réseau des moyens de modulation.

On obtient ainsi une double modulation du signal électromagnétique à la fréquence de la porteuse Fp.

Pour chaque point d'émission du signal électromagnétique, on reçoit le signal ayant traversé le matériau sur l'ensemble des capteurs 200 du réseau des moyens de modulation 140.

Le signal recueilli sur un capteur correspond alors à différents trajets de signaux électromagnétiques ayant traversé le matériau 150.

On mesure ainsi point à point l'ensemble des parcours des signaux électromagnétiques traversant le matériau 150 entre tous les capteurs des deux réseaux.

Cela offre la possibilité de pouvoir réaliser de l'imagerie tomographique dans le matériau 150 analysé en multistatisme et d'obtenir des images reconstruites de grande qualité.

### 2. Dispositif de contrôle d'un matériau en mode réflexion

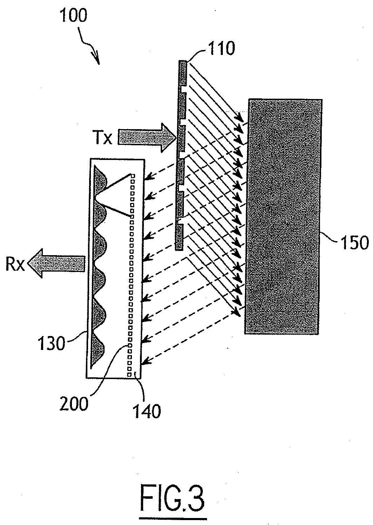

Sur la figure 3, on observe un dispositif de contrôle d'un matériau 150 en mode réflexion. Les moyens et le principe de fonctionnement sont identiques à celui du dispositif de contrôle en mode transmission.

La différence réside principalement quant à la disposition relative des moyens d'émission 110, des moyens de modulation 140 et de réception 130.

Dans le mode réflexion, les moyens d'émission 110 d'une part et les moyens de modulation 140 et de réception 130 d'autre part sont disposés d'un même coté par rapport au matériau 150 à contrôler de sorte que les moyens de modulation 140 reçoivent le signal réfléchi par le matériau 150.

Ce dispositif offre l'avantage de fonctionner en double transmission puisque dans ce mode le signal électromagnétique à la fréquence de la porteuse traverse deux fois le matériau 150 sous test. Ce type de dispositif présente un avantage dans le cas de manque d'accès d'un côté du matériau 150 à mesurer et dans le cas ou le matériau 150 à tester présente une face métallisée.

Dans une variante de réalisation, on peut prévoir de placer une plaque métallique derrière le matériau 150 sous test du côté opposé aux moyens d'émission 110, de modulation 140 et de réception 130 pour améliorer la réflexion.

### 3. Réseau de capteurs

Le capteur 200 de modulation spatiale représenté sur la figure 4 se compose de quatre éléments principaux, à savoir un ensemble de brins rayonnants 220, un composant électronique non linéaire 230, des fils d'alimentation 240 et un substrat 210.

Le principe de fonctionnement d'un capteur 200 est décrit pour les capteurs 200 des moyens de modulation 140 présents sur le parcours du signal entre le matériau 150 et les moyens de réception 130. Il est le suivant.

Les brins rayonnants 220 du capteur 200 vont capter les signaux électromagnétiques à la fréquence de la porteuse Fp ayant traversé le matériau 150.

Par ailleurs, ces brins 220 sont chargés par le composant électronique non linéaire 230 lui-même polarisé à l'aide d'un signal à la fréquence de modulation Fm2.

Ils génèrent alors un signal modulé à la fréquence modulée Fp ± Fm2, signal qui va être reçu par les moyens de réception 130.

Plus précisément, chaque capteur 200 comprend deux brins rayonnants 220 connectés chacun de part et d'autre du composant électronique non linéaire 230.

Le composant électronique non linéaire 230 est de préférence une diode électrique ou photoélectrique.

Il peut être également un composant non linéaire sensible à la température de type thermistance.

L'efficacité de modulation du capteur 200 est directement liée au contraste entre l'état passant et l'état bloqué de la diode.

Les deux brins rayonnants 220 se présentent de préférence sous la forme d'un segment rectangulaire. Dans une variante, d'autres formes sont envisageables pour les brins rayonnants 220.

La taille des brins 220 est, de préférence, petite devant la longueur d'onde.

Il est à noter que plus la surface des brins 220 augmente, plus le niveau en amplitude du signal électromagnétique modulé à la fréquence Fp ± Fm2 est important.

Par ailleurs, ces brins 220 sont positionnés dans une configuration angulaire déterminée par rapport au sens de la polarisation du réseau d'antennes des moyens d'émission 110. L'angle α formé entre la direction longitudinale des brins et le sens de polarisation du réseau d'antennes peut être compris entre 0° et 180 °.

De préférence, les brins 220 sont positionnés à α=45 ° par rapport au sens de polarisation du réseau d'antennes des moyens d'émission 110.

Cela offre l'avantage de diminuer l'écartement entre les différents capteurs 200 d'un réseau avec pour conséquence d'augmenter la densité de capteurs 200 et donc d'améliorer la résolution spatiale du dispositif 100 comme décrit plus loin en relation avec la figure 5.

Ainsi, de nombreuses configurations peuvent être adoptées pour les brins rayonnants 220 en jouant sur la forme ou l'augmentation ou la diminution de la longueur ou de la largeur des brins 220 et le positionnement des brins selon la polarisation du réseau d'antennes des moyens d'émission 110.

Chaque capteur 200 comprend, en outre, deux fils d'alimentation 240 alimentant le composant électronique non linéaire 230, ces fils d'alimentation 240 étant disposés de préférence perpendiculairement au sens de polarisation du réseau d'antennes des moyens d'émission 110.

Ceci offre l'avantage de diminuer l'influence des fils d'alimentation 240 sur le champ électromagnétique incident.

Par ailleurs, la configuration dans laquelle les fils d'alimentation 240 et les brins 220 sont disposés respectivement perpendiculairement et à α=45 ° par rapport au sens de polarisation du réseau d'antennes d'émission permet de s'affranchir de l'utilisation de moyens de filtrage le long des fils d'alimentation 240 et notamment de filtres passe bas dont le rôle est de bloquer les signaux induits à la fréquence Fp sur ces fils tout en assurant le passage des signaux à la fréquence de modulation Fm2.

Par ailleurs, le substrat 210 sur lequel repose l'ensemble des autres éléments peut être souple ou rigide. Il présente avantageusement des propriétés diélectriques ainsi qu'une épaisseur faibles pour limiter les réflexions à l'interface et les pertes en amplitude de signal électromagnétique incident.

Dans le cas d'un substrat 210 flexible, des configurations conformées des réseaux de capteurs 200 peuvent être envisagées. Par exemple, un réseau de capteurs 200 de type circulaire permettra de s'adapter au contrôle d'un matériau défilant dans un tube par exemple.

Les éléments modulant 230 intégrés dans les capteurs 200 sont, de préférence, des composants non linéaires électriques ou électro-optiques .

Les files d'alimentation 240, quant à eux, peuvent être des fils électriques imprimés ou non et dans le cas de capteurs électro-optiques, les fils d'alimentation 240 sont remplacés par des fibres optiques ou un faisceau laser.

Sur la figure 5, on observe un réseau de capteurs identiques au capteur 200 qui vient d'être décrit en relation avec la figure 4.

La longueur du réseau doit être égale ou supérieure à la largeur du matériau 150 à contrôler pour pouvoir le contrôler entièrement.

Ces capteurs 200 du réseau sont de préférence équidistants deux à deux. Ils sont plus précisément espacés d'une distance D particulière permettant de définir la résolution spatiale du dispositif.

En effet, on comprend que plus cette distance D est petite, plus la largeur de la zone du matériau 150 analysée par un capteur 200 est petite.

Par ailleurs, les capteurs 200 mis en réseau peuvent avoir chacun des dimensions et des positions angulaires différentes par rapport à la polarisation du réseau d'antennes des moyens d'émission 110.

Une variante de réalisation prévoit d'agencer les capteurs 200 successifs avec leurs brins 220 orientées à α=+45° et α=-45° par rapport au sens de polarisation du réseau d'antennes des moyens d'émission 110.

Ceci permet d'obtenir une bipolarisation pour le réseau de capteurs 200 et de pouvoir mesurer les deux composantes du champ électromagnétique incident.

Une autre variante de réalisation consiste à utiliser un arrangement de plusieurs composants électroniques non linéaires 230 mis en série par exemple et chargeant les brins 220 du capteur.

Par ailleurs, une autre variante de réalisation consiste à fragmenter les brins 220 du capteur qui sont chargés par un arrangement de plusieurs composants électroniques 230 non linéaires.

De plus, une variante de réalisation prévoit un empilement de deux capteurs 200 présentant deux positions angulaires différentes par rapport à la polarisation du réseau d'antennes des moyens d'émission 110. Ceci permet d'obtenir une bipolarisation du capteur 200 global formé et de pouvoir mesurer les deux composantes du champ électromagnétique incident en coïncidence localement.

Enfin, une autre variante de réalisation prévoit de mettre en oeuvre des antennes des moyens d'émission et/ou de réception bipolarisées en combinaisons avec des capteurs bipolarisés de façon à pouvoir réaliser des mesures polarimétriques des défauts dans les matériaux.

## Revendications

1. Dispositif de contrôle (100) d'un matériau (150) comportant au moins des moyens d'émission (110) d'un signal électromagnétique, de type micro-ondes, à une fréquence porteuse Fp pour illuminer le matériau (150) et des moyens de réception (130) du signal électromagnétique comprenant des moyens de modulation (140) du signal électromagnétique à une fréquence Fm2 agencés, sur le parcours du signal, entre le matériau (150) et les moyens de réception (130) du signal électromagnétique pour discrétiser spatialement le signal électromagnétique ayant traversé le matériau, **caractérisé en ce qu'**il comprend également des moyens de modulation du signal électromagnétique à une fréquence Fm1 disposés, sur le parcours du signal, entre les moyens d'émission (110) et le matériau (150) pour discrétiser spatialement le signal électromagnétique émis, et **en ce que** les différents moyens de modulation (141,140) comprennent un réseau de capteurs (200) de modulation spatiale, chaque capteur (200) étant formé d'un composant électronique non linéaire ou d'un arrangement de composants électroniques non linéaires (230) alimenté à la fréquence de modulation Fm désirée et chargeant deux brins rayonnants (220) ou plus connectés chacun au ou aux composants.

2. Dispositif selon la revendication 1 **caractérisé en ce que** chaque capteur (200) comprend, en outre, deux fils d'alimentation (240) alimentant le composant électronique non linéaire (230), ces fils d'alimentation (240) étant disposés perpendiculairement au sens de polarisation des moyens d'émission (110).

3. Dispositif selon l'une des revendications 1 à 2 **caractérisé en ce que** le composant électronique non linéaire (230) est une diode électrique, une diode photoélectrique ou encore une thermistance et les fils d'alimentation (240) pouvant être des fils électriques imprimés ou non ou encore des fibres optiques.

4. Dispositif selon l'une des revendications 1 à 3 **caractérisé en ce que** les capteurs (200) sont des dipôles électriques chargés par des éléments non linéaires de type diode électrique, diode photoélectrique ou thermistance.

5. Dispositif selon l'une des revendications 1 à 4 **caractérisé en ce que** les capteurs (200) d'un réseau sont équidistants deux à deux.

6. Dispositif selon la revendication 5 **caractérisé en ce que** l'ensemble des capteurs (200) de chaque réseau, faisant face au matériau (150), sont alignés suivant une ou plusieurs rangées dans un plan commun perpendiculaire au sens de propagation du signal émis par les moyens d'émission (110).

7. Dispositif selon l'une des revendications 5 à 6 **caractérisé en ce que** chaque capteur (200) comprend des brins rayonnants (220) positionnés à ±45° par rapport au sens de polarisation des moyens d'émission (110).

8. Dispositif selon l'une des revendications précédentes **caractérisé en ce que** les moyens d'émission (110) d'une part et d'autre part les moyens de réception (130), ainsi que les moyens de modulation (140) agencés entre le matériau (150) et lesdits moyens de réception sont disposés de part et d'autre du matériau (150) de sorte que les moyens de modulation (140) reçoivent le signal transmis à travers le matériau (150).

9. Dispositif selon l'une des revendications 1 à 7 **caractérisé en ce que** les moyens d'émission (110) d'une part et d'autre part les moyens de réception (130), ainsi que les moyens de modulation (140) agencés entre le matériau (150) et les moyens de réception sont disposés d'un même coté par rapport au matériau (150) de sorte que les moyens de modulation (140) reçoivent le signal réfléchi par le matériau (150).

10. Dispositif selon l'une des revendications précédentes **caractérisé en ce que** les moyens d'émission (110) et de réception (130) comprennent chacun un réseau d'antennes du même type.

11. Dispositif selon l'une des revendications précédentes **caractérisé en ce qu'**il comprend des moyens de démultiplexage (180) du signal modulant vers les moyens de modulation (140) agencés entre le matériau et les moyens de réception.

12. Dispositif selon la revendication précédente **caractérisé en ce que** les moyens de démultiplexage (180) sont des moyens de démultiplexage temporel ou spatial.

13. Dispositif selon l'une des revendications précédentes **caractérisé en ce qu'**il comprend, en outre, des moyens de filtrage (190) des signaux reçus des moyens de réception (130).

14. Dispositif selon l'une des revendications 1 à 13 **caractérisé en ce que** les capteurs (200) comprennent un substrat flexible permettant de conformer chaque réseau de capteurs (200).

15. Procédé de contrôle d'un matériau (150) mettant en oeuvre le dispositif selon l'une des revendications 1 à 14
**caractérisé en ce qu'**on
émet un signal électromagnétique, de type micro-ondes, à une fréquence Fp pour illuminer le matériau (150), on module le signal électromagnétique émis avant d'atteindre le matériau (150) à une fréquence de modulation Fm1, on module le signal électromagnétique issu du matériau (150) à une fréquence de modulation Fm2, on le réceptionne et on acquiert une image du matériau (150) à partir du signal résultant des modulations.

## Patentansprüche

1. Vorrichtung (100) zur Kontrolle eines Materials (150), die mindestens Mittel (110) zum Senden eines elektromagnetischen Signals vom Typ Mikrowellen bei einer Trägerfrequenz Fp, um das Material (150) zu beleuchten, und Mittel (130) zum Empfang des elektromagnetischen Signals umfasst, die Mittel (140) zur Modulation des elektromagnetischen Signals auf eine Frequenz Fm2 umfassen, die auf dem Weg des Signals zwischen dem Material (150) und den Mitteln (130) zum Empfang des elektromagnetischen Signals angeordnet sind, um das elektromagnetische Signal, das das Material durchquert hat, räumlich zu diskretisieren, **dadurch gekennzeichnet, dass** sie auch Mittel zur Modulation des elektromagnetischen Signals auf eine Frequenz Fm1 umfasst, die auf dem Weg des Signals zwischen den Sendemitteln (110) und dem Material (150) angeordnet sind, um das gesendete elektromagnetische Signal räumlich zu diskretisieren, und dadurch, dass die verschiedenen Modulationsmittel (141, 140) ein Netz von Sensoren (200) für die räumliche Modulation umfassen, wobei jeder Sensor (200) aus einem nichtlinearen elektronischen Bauelement oder aus einer Anordnung nichtlinearer elektronischer Bauelemente (230) gebildet ist, das/die bei der gewünschten Modulationsfrequenz Fm mit Strom versorgt wird, und zwei oder mehr Strahlungselemente (220) auflädt, die jeweils mit dem oder den Bauelementen verbunden sind.

2. Vorrichtung nach Anspruch 1, **dadurch gekennzeichnet, dass** jeder Sensor (200) ferner zwei Stromversorgungsdrähte (240) umfasst, die das nichtlineare elektronische Bauelement (230) mit Strom versorgen, wobei diese Stromversorgungsdrähte (240) senkrecht zur Polarisationsrichtung der Sendemittel (110) angeordnet sind.

3. Vorrichtung nach einem der Ansprüche 1 bis 2, **dadurch gekennzeichnet, dass** das nichtlineare elektronische Bauelement (230) eine elektrische Diode, eine photoelektrische Diode oder auch ein Thermistor ist und die Stromversorgungsdrähte (240) gedruckte oder nicht gedruckte elektrische Drähte oder auch Lichtleitfasern sein können.

4. Vorrichtung einem der Ansprüche 1 bis 3, **dadurch gekennzeichnet, dass** die Sensoren (200) elektrische Dipole sind, die durch nichtlineare Elemente vom Typ elektrische Diode, photoelektrische Diode oder Thermistor aufgeladen werden.

5. Vorrichtung nach einem der Ansprüche 1 bis 4, **dadurch gekennzeichnet, dass** jeweils zwei Sensoren (200) eines Netzes abstandsgleich sind.

6. Vorrichtung nach Anspruch 5, **dadurch gekennzeichnet, dass** die Menge der Sensoren (200) von jedem Netz, das dem Material (150) gegenübersteht, entlang einer oder mehreren Reihen in einer gemeinsamen Ebene angeordnet ist, die senkrecht zur Ausbreitungsrichtung des durch die Sendemittel (110) gesendeten Signals sind.

7. Vorrichtung nach einem der Ansprüche 5 bis 6, **dadurch gekennzeichnet, dass** jeder Sensor (200) Strahlungselemente (220) umfasst, die in ±45° in Bezug zur Polarisationsrichtung der Sendemittel (110) positioniert sind.

8. Vorrichtung nach einem der vorhergehenden Ansprüche, **dadurch gekennzeichnet, dass** die Sendemittel (110) einerseits und die Empfangsmittel (130) andererseits sowie die Modulationsmittel (140), die zwischen dem Material (150) und dem Empfangsmitteln angeordnet sind, auf beiden Seiten des Materials (150) angeordnet sind, derart, dass die Modulationsmittel (140) das durch das Material (150) gesendete Signal empfangen.

9. Vorrichtung nach einem der Ansprüche 1 bis 7, **dadurch gekennzeichnet, dass** die Sendemittel (110) einerseits und die Empfangsmittel (130) andererseits sowie die Modulationsmittel (140), die zwischen dem Material (150) und den Empfangsmitteln angeordnet sind, auf einer selben Seite in Bezug zu dem Material (150) angeordnet sind, derart, dass die Modulationsmittel (140) das durch das Material (150) reflektierte Signal empfangen.

10. Vorrichtung nach einem der vorhergehenden Ansprüche, **dadurch gekennzeichnet, dass** die Sende-(110) und Empfangsmittel (130) jeweils ein Netz von Antennen des gleichen Typs umfassen.

11. Vorrichtung nach einem der vorhergehenden Ansprüche, **dadurch gekennzeichnet, dass** sie Mittel (180) zum Demultiplexieren des Signals umfassen, die in Richtung der Modulationsmittel (140) modulieren, die zwischen dem Material und den Empfangsmitteln angeordnet sind.

12. Vorrichtung nach dem vorhergehenden Anspruch, **dadurch gekennzeichnet, dass** die Demultiplexierungsmittel (180) Mittel zur zeitlichen oder räumlichen Demultiplexierung sind.

13. Vorrichtung nach einem der vorhergehenden Ansprüche, **dadurch gekennzeichnet, dass** es ferner Mittel (190) zum Filtern der von den Empfangsmitteln (130) empfangenen Signale umfasst.

14. Vorrichtung nach einem der Ansprüche 1 bis 13, **dadurch gekennzeichnet, dass** die Sensoren (200) ein biegsames Substrat umfassen, das das Anpassen von jedem Netz von Sensoren (200) ermöglicht.

15. Verfahren zur Kontrolle eines Materials (150), das eine Vorrichtung nach einem der Ansprüche 1 bis 14 einsetzt, **dadurch gekennzeichnet, dass** ein elektromagnetisches Signal vom Typ Mikrowellen bei einer Frequenz Fp gesendet wird, um das Material (150) zu beleuchten, das gesendete elektromagnetische Signal, bevor es das Material (150) erreicht, bei einer Modulationsfrequenz Fm1 moduliert wird, das elektromagnetische Signal, das von dem Material (150) stammt, mit einer Modulationsfrequenz Fm2 moduliert wird und ein Bild des Materials (150) ausgehend von dem Signal erfasst wird, das aus den Modulationen resultiert.

## Claims

1. A device for controlling (100) a material (150), said device comprising at least means for transmitting (110) an electromagnetic signal, of microwave type, at a carrier frequency Fp to illuminate the material (150) and means for receiving (130) the electromagnetic signal comprising modulation means (140) of the electromagnetic signal at a frequency Fm2, arranged on the signal path, between the material (150) and the electromagnetic signal reception means (130) in order to spatially sample the electromagnetic signal passed through the material, **characterized in that** it further comprises means for modulating the electromagnetic signal at a frequency Fm1, arranged on the signal path, between the transmission means (110) and the material (150) in order to spatially sample the emitted electromagnetic signal, and **in that** the different modulation means (141, 140) include an array of sensors (200) of spatial modulation, each sensor (200) being formed by a nonlinear electronic component or by an array of nonlinear electronic components (230) fed at the desired modulation frequency Fm and charging two or more radiating wires (220) each connected to the component(s).

2. The device according to claim 1, **characterized in that** each sensor (200) further includes two feed wires (240) feeding the nonlinear electronic component (230), these feed wires (240) being arranged perpendicular to the direction of polarization of the transmission means (110).

3. The device according to one of claims 1 to 2, **characterized in that** the nonlinear electronic component (230) is an electric diode, a photoelectric diode or a thermistor and the feed wires (240) can be imprinted or non-imprinted electrical wires or optical fibers.

4. The device according to one of claims 1 to 3, **characterized in that** the sensors (200) are electric dipoles charged by nonlinear elements such as electric diode, photoelectric diode or thermistor type.

5. The device according to one of claims 1 to 4, **characterized in that** the sensors (200) of an array are equidistant in pairs.

6. The device according to claim 5, **characterized in that** all the sensors (200) of each array, facing the material (150), are aligned in one or a plurality of rows in a common plane perpendicular to propagation direction of the signal transmitted by the transmission means (110).

7. The device according to one of claims 5 to 6, **characterized in that** each sensor (200) includes radiating wires (220) positioned at ±45° with respect to the direction of polarization of the transmission means (110).

8. The device according to one of the preceding claims, **characterized in that** the transmission means (110), on one hand, and the reception means (130) and the modulation means (140) arranged between the material (150) and said reception means, on the other hand, are disposed on either side of the material (150) such that the modulation means (140) receive the signal transmitted through the material (150).

9. The device according to one of claims 1 to 7, **characterized in that** the transmission means (110), on one hand, and the reception means (130) and the modulation means (140) arranged between the material (150) and the reception means, on the other hand, are disposed on the same side with respect to the material (150) such that the modulation means (140) receive the signal reflected by the material (150).

10. The device according to one of the preceding claims, **characterized in that** the transmission (110) and reception (130) means each include an array of antennas of the same type.

11. The device according to one of the preceding claims, **characterized in that** it includes means (180) for demultiplexing the modulating signal toward the modulation means (140) arranged between the material and the reception means.

12. The device according to the preceding claim, **characterized in that** the demultiplexing means (180) are temporal or spatial demultiplexing means.

13. The device according to one of the preceding claims, **characterized in that** the device further includes means for filtering (190) signals received by said reception means (130).

14. The device according to one of claims 1 to 13, **characterized in that** the sensors (200) include a flexible substrate enabling each sensor array (200) to be formed.

15. A method for controlling a material (150), said method implementing the device according to one of claims 1 to 14, **characterized in that** an electromagnetic signal, of microwave type, is transmitted at a frequency Fp to illuminate the material (150), the transmitted electromagnetic signal is modulated at a modulation frequency Fm1 prior to reaching the material (150), the electromagnetic signal from the material (150) is modulated at a modulation frequency Fm2 and is received, an image of the material (150) is obtained on the basis of the signal resulting from the modulations.
